Europäisches Patentamt

(19) European Patent Office

Office européen des brevets

(11) Publication number: **0 098 355**
**B1**

(12) **EUROPEAN PATENT SPECIFICATION**

(45) Date of publication of patent specification: **19.11.87**

(51) Int. Cl.⁴: **B 64 C 33/02**

(21) Application number: **83104220.5**

(22) Date of filing: **29.04.83**

(54) Aerodynamically-induced wing-flapping for the propulsion of ornithopters.

(30) Priority: **02.07.82 CA 406479**

(43) Date of publication of application:
**18.01.84 Bulletin 84/03**

(45) Publication of the grant of the patent:
**19.11.87 Bulletin 87/47**

(84) Designated Contracting States:
**AT CH DE FR GB IT LI NL SE**

(56) References cited:
**DE-A-1 050 664**
**FR-A- 430 647**
**FR-A-1 228 320**
**US-A-4 139 171**

(73) Proprietor: **Atraghji, Edward**
**57 Dorchester Way**
**Kenton Middex, HA3 9RZ (GB)**

(72) Inventor: **Atraghji, Edward**
**57 Dorchester Way**
**Kenton Middex, HA3 9RZ (GB)**

Courier Press, Leamington Spa, England.

## Description

The invention relates to an ornithopter employing aerodynamically-induced wing-flapping to reduce the input power required for its propulsion. By contrast, existing designs of ornithopters employ direct mechanical means, in one form or another, to flap the wings, e.g. O. Dinort in German Patent DE—A—1 050 664 disclosing the features of the preamble of claims 1 and 2. Such arrangements place a high demand on the pilot/engine in view of the large inertia of the virtual air mass set in motion by the flapping wings.

Pilots readily recognize that an aircraft undergoing a yawing motion develops roll. The reason is that the advancing wing generates a greater lift than does the receding wing. Thus, it can be argued that by imparting a reciprocating yawing motion to a wing, appropriately restrained in the flapping direction by spring action, it would be possible to excite said wing into a flapping mode of oscillation. To some extent this principle is employed in the design of M. Lanoe — French Patent No. 1 228 320 (Cl. Int. B 64c) published August 29, 1960 — where an outboard segment of the wing is excited into a flapping mode as the whole wing is subjected to a reciprocating yawing motion. Observation of birds in flight, however, indicate strongly that the emphasis should be reversed, i.e. the excitor should be the outboard wing segment while the excited should be the whole wing. The intent of this invention is to employ the increase in the lift force generated on the outboard wing segment, when the latter is yawed forward, to lever the whole wing upwards away from its spring-restrained initial position. The downstroke is achieved by a reverse torque which develops as the impulsive lift force on the outboard wing segment diminishes when the latter's forward sweeping motion is slowed down or halted.

The primary objective of this invention is to reduce the required input power as a result of the smaller inertia of the outboard wing segment being actuated as compared with that when the whole wing is actuated.

Another objective is to reduce the excursions of the overall lift developed on the wing since the inboard segment of the wing does not recede.

A further objective is that the spring restraining the wing can be conveniently located out of the air stream in a streamlined auxiliary strut, or even inside the fuselage, to reduce aerodynamic drag.

A still further objective is to provide adequate and effective means for controlling the ornithopter.

According to the invention, the problems stated above are overcome by the features of claims 1 and 2.

One way of carrying out the invention is described in detail below with reference to drawings which illustrate embodiments of the invention,

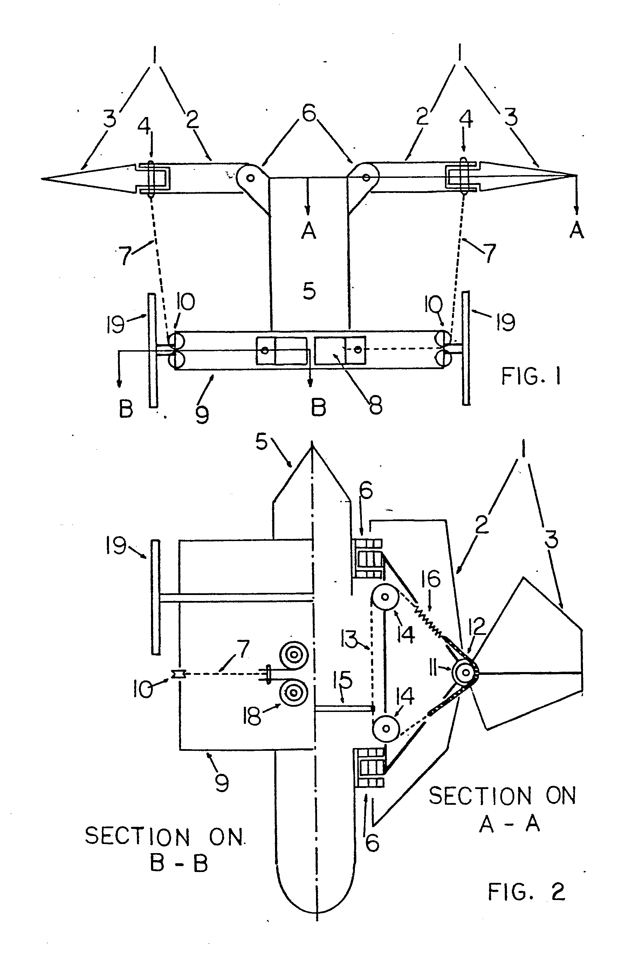

Figure 1 is a front elevation of one embodiment,

Figure 2 is a section of the line A—A and line B—B of Figure 1,

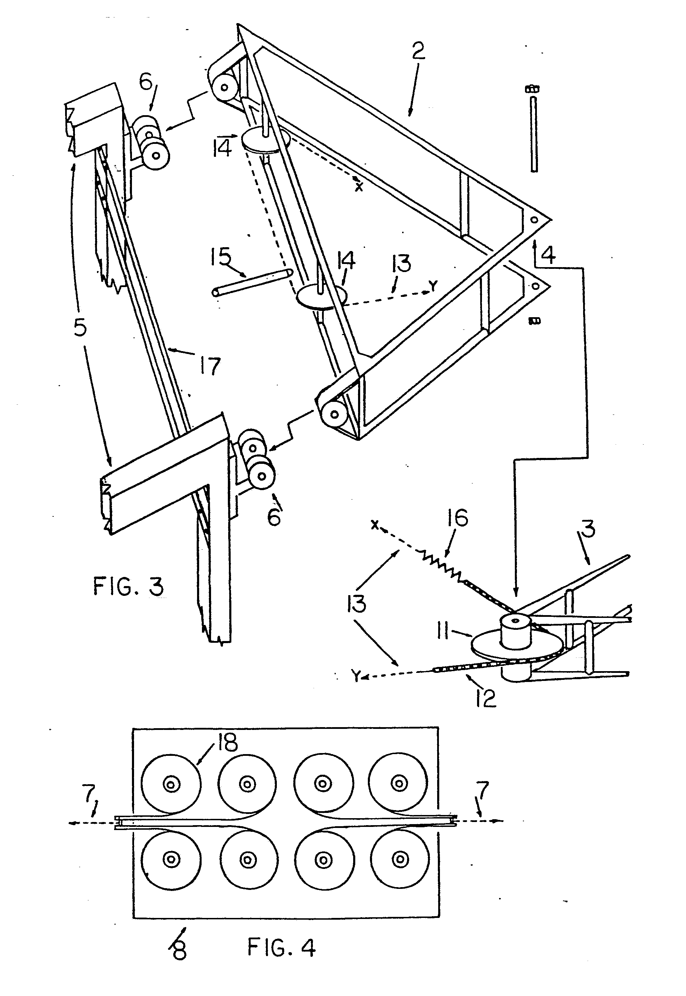

Figure 3 is a perspective view of the infra structure of the port wing segments and assembly thereof to each other and to fuselage,

Figure 4 is a section view of the restraining-spring-pack unit showing a cluster arrangement of constant force springs,

Figure 5 is a perspective view of the general arrangement of the input-power/control stick and its attachment to cables transmitting the input power and control functions to the outboard wing segments,

Figure 6 is an elevation view of another embodiment having restraining-spring-pack unit and shock-absorber combination located inside fuselage.

The ornithopter illustrated has each of its wings (1) made-up in two segments (2) and (3) connected by a yawing hinge (4) whose axis is generally perpendicular to the plane of the inboard wing segment (2). The outboard wing segment (3) can be yawed relative to the inboard wing segment (2) about the axis of hinge (4). The inboard wing segment (2) is connected to the fuselage (5) via a flapping hinge (6) whose axis lies generally parallel to the longitudinal axis of the fuselage (5). The inboard wing segment (2) is spring-restrained in the flapping direction by a cable (7) and spring (8) located in an auxiliary streamlined strut (9). An idler pulley (10) is provided to allow the restraining cable (7) to operate freely. Forward or rearward yawing movement of the outboard wing segment (3) relative to the inboard wing segment (2) is effected through the arrangement of sprocket wheel (11), chain (12), cable (13), idler pulleys (14) and input-power/control stick (15) by the action of pulling back or pushing forward the stick (15), respectively. A spring (16) keeps the chain (12) taught at all times and a guide (17) retains the stick (15) in proper alignment with cable (13) and idler pulleys (14).

The restraining-spring-pack (8) is made-up of a number of constant load springs (18) clustered together to guard against catastrophic failure that might be occasioned by the use of a single spring. The constant load springs (18) offer the desirable feature of compactness, a nearly constant step load and a large working deflection.

In operational use the ornithopter is foot launched, towed or driven via pedalled or powered wheels (19) into the oncoming wind. When a suitable speed is reached the stick (15) is pulled back swiftly. This action causes the outboard wing segment (3) to be flicked forward in a yawing motion generating impulsive lift in the process. If the resulting impulsive torque is sufficiently high it would force the whole wing upwards against the pull of the restraining cable (7) and spring (8). As the motion of the stick (15) is slowed down, towards the end of the stroke, the excess lift is lost and the process reverses, i.e.

the wing is pulled downwards by the spring (8). At the bottom of the downstroke the outboard wing segment (3) is swept rearwards, by pushing the stick (15) forward, to generate additional thrust and to prepare the wing for its next beat.

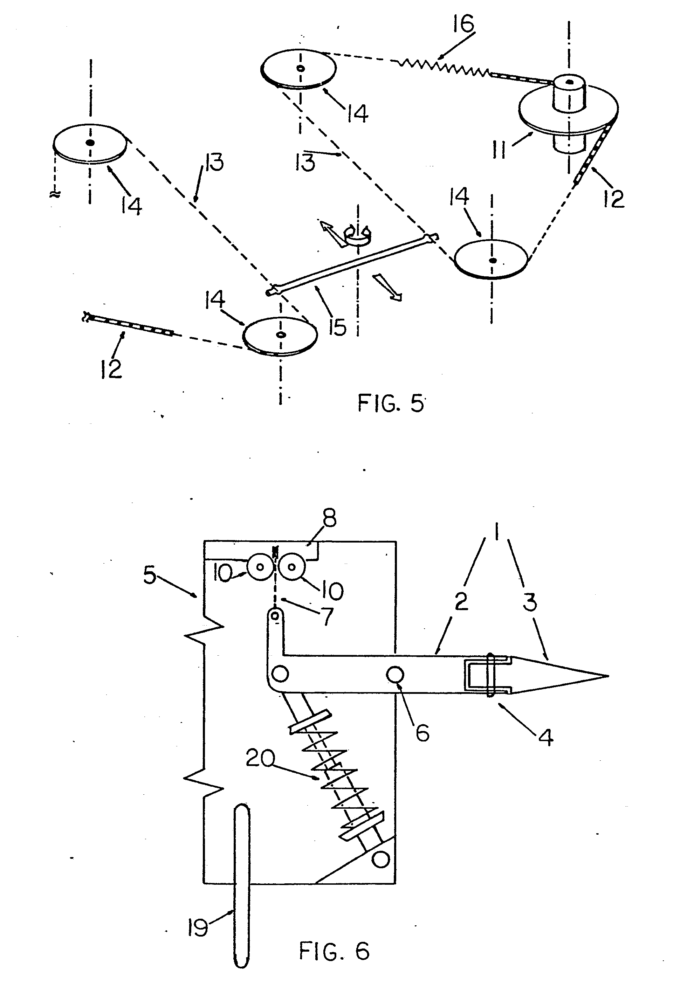

Control of the ornithopter is available through the stick (15) longitudinally by a symmetrical forward/rearward movement of the stick and laterally by an antisymmetrical, yawing, movement of the stick (15) as indicated by the broad arrows in Figure 5.

In accordance with another embodiment the restraining-spring-pack unit (8) is located inside the fuselage (5) with the optional single wheel (19) partially concealed in said fuselage to reduce aerodynamic drag. Buffeting, if a problem, may be damped by the installation of a shock absorber unit (20).

### Claims

1. A wing (1) to be used in conjunction with an ornithopter the wing comprising an inboard wing segment (2) connected at its inboard extremity to the fuselage (5) by means (6) permitting flapping movement of the inboard wing segment (2); wherein a respective outboard wing segment (3) is connected at its inboard extremity to the outboard extremity of its respective inboard wing segment (2) by means (4) permitting yawing movement of the outboard wing segment (3) relative to its respective inboard wing segment (2) to form, when so assembled, the wing arrangement (1); said wing (1) is characterized in operation by undergoing passive, aerodynamically-induced up (down) flapping oscillation resulting from an increasing (decreasing) aerodynamic lift force generated on the outboard wing segment (3) when only the latter is actively oscillated, by motive means, in a forward (rearward) yawing direction to, thus, eliminate active flapping of the wing (1) or any segment thereof and, thereby, minimize the input power required for propulsion of said ornithopter.

2. An ornithopter comprising at least one pair of wings (1) each wing having an inboard wing segment (2) connected to the fuselage (5) therebetween by means (6) permitting flapping movement of the wing (1) and an outboard wing segment (3) connected at its inboard extremity to the outboard extremity of its respective inboard wing segment by means (4) permitting yawing movement of the outboard wing segment relative to its respective inboard wing segment, characterised by means (7, 8) restraining each wing (1) to an initial lowest position and said means serving to store excess torque generated on upstroke of each wing (1) to thereafter effect the downstroke; motive means (15) to provide the input power required to actively oscillate outboard wing segments (3) in the yawing direction to thereby induce passive flapping oscillation of each entire wing (1).

### Patentansprüche

1. Ein Fluegel (1) soll in Verbindung mit einem Schwingenflugzeug benutzt werden, der Fluegel besteht aus einem inneren Fluegelteil (2) welches an seinem Innenbordextrem dem Rumpf (5) verbunden ist mittels (6), dies besagte Mittel (6) erlaubt schlagende Bewegungen des inneren Fluegelteiles (2); wobei ein respektiver aeusserer Fluegelteil (3) an seinem Innenbordextrem zum Aussenbordextrem seines respektiven inneren Fluegelteiles (2) mittels (4) verbunden ist, besagtes Mittel (4) erlaubt eine gierende Bewegung des aeusseren Fluegelteiles (3) im Verhaeltnis zu seinem respektiven inneren Fluegelteil (2), um die Fluegelanordnung (1) zu bilden, wenn sie auf diese Art zusammengefuegt sind; der besagte Fluegel (1) wird im Betrieb durch passive, aerodynamisch eingeleitete auf(nieder)-schlagende Schwingungen charakterisiert, welche durch eine zunehmende (abnehmende) aerodynamische Auftriebskraft entstehen, die auf dem aeusseren Fluegelteil (3) erzeugt wird, waehrend nur der letztere durch Bewegungskraft in einer vorwaerts (rueckwaerts) gierenden Richtung aktiv in Schwingung versetzt wird; dadurch wird das aktive Schlagen des Fluegels (1) oder eines seiner Teile ausgeschaltet und die Triebkraft fuer den Antrieb des besagten Schwingenflugzeuges auf ein Mindestmass herabgesetzt.

2. Ein Schwingenflugzeug, welches zumindest ein Paar Fluegel (1) besitzt, jeder Fluegel (1) hat einen inneren Fluegelteil (2) welcher mittels (6) zum Rumpf (5) verbunden ist, durch Mittel (6) ist die schlagende Bewegung des Fluegels (1) erlaubt, und einen aeusseren Fluegelteil (3) welcher an seinem Innenbordextrem zum Aussenbordextrem seines respektiven inneren Fluegelteiles (2) mittels (4) verbunden ist, dadurch eine gierende Bewegung des aeusseren Fluegelteiles (3) mittels (4) im Verhaeltnis zu seinem respektiven inneren Fluegelteil (2) erlaubt; dieses Schwingenflugzeug ist gekennzeichnet mittels (7, 8) welche jeden Fluegel (1) zu einer anfaenglich tiefsten Stellung einschraenkt, diese besagten Mittel (7, 8) dienen dazu den ueberschuessigen Drehmoment welcher durch den Aufschlag jedes Fluegels (1) erzeugt wird zu speichern, darnach bewirkt der ueberschuessige Drehmoment den Niederschlag; Bewegungskraft (15) beschafft die Triebkraft welche gebraucht wird, die aeusseren Fluegelteile (3) aktiv in Schwingungen zu versetzen in gierender Richtung, um dadurch passive schlagende Schwingungen jedes ganzen Fluegels (1) zu induzieren.

### Revendications

1. Une aile (1), utilisée sur un ornithoptère, comprenant un segment d'aile intérieur (2), relié à son extrémité intérieure au fuselage (5) à l'aide des fixations (6) autorisant le mouvement en battement du segment d'aile intérieur (2); ainsi qu'un segment d'aile extérieur (3) relié à son extrémité intérieure à l'extrémité extérieure du segment d'aile intérieur (2) à l'aide des fixations (4) autorisant le mouvement en lacet du segment d'aile extérieur (3) par rapport au segment d'aile intérieur (2) correspondant; ladite aile (1) ayant la particularité de subir en fonctionnement une oscillation passive en battement ascendant (descendant) à induction aérodynamique produite par l'effort de poussée croissant (décroissant) sur le segment d'aile extérieur (3) lorsque ce dernier est activement oscillé, par l'intermédiaire des moyens moteurs, dans un mouvement de lacet avançant (reculant) afin d'éliminer le battement actif de l'aile (1) ou de tout segment de cette aile et donc de réduire la puissance d'attaque nécessaire à la propulsion dudit ornithoptère.

2. Un ornithoptère comprenant au moins une paire d'ailes (1) chaque aile ayant un segment d'aile intérieur (2) relié au fuselage (5) par l'intermédiaire des fixations (6) autorisant le mouvement en battement de l'aile (1) et un segment extérieur d'aile (3) relié à son extrémité intérieure à l'extrémité extérieure du segment d'aile intérieur correspondant par l'intermédiaire des fixations (4) autorisant le mouvement en lacet du segment extérieur de l'aile par rapport au segment intérieur de l'aile correspondant; caractérisé par des dispositifs (7, 8) permettant de retenir chaque aile (1) dans une position initiale basse et servant à accumuler le couple produit lors de la course ascendante de chaque aile (1) et de le récupérer pour effectuer la course descendante; des moyens moteurs (15) permettant de fournir la puissance d'attaque nécessaire pour faire activement osciller les segments d'aile extérieurs (3) en lacet afin d'induire l'oscillation passive en battement de chaque ensemble d'aile (1).

FIG. 1

SECTION ON.
B - B

SECTION ON
A - A

FIG. 2

FIG. 3

FIG. 4

FIG. 5

FIG. 6

3